Europäisches Patentamt

European Patent Office

Office européen des brevets

(19)

(11) Numéro de publication: **0 244 321**
**B1**

(12) # FASCICULE DE BREVET EUROPÉEN

(45) Date de publication du fascicule du brevet:
25.10.89

(51) Int. Cl.⁴: **B 05 D 1/34,** C 04 B 26/04,
C 08 K 3/38

(21) Numéro de dépôt: 87400984.8

(22) Date de dépôt: 29.04.87

(54) **Procédé pour former un revêtement isolant directement sur une surface de support, et composition pour la mise en oeuvre de ce procédé.**

(30) Priorité: 02.05.86 FR 8606382

(43) Date de publication de la demande:
04.11.87 Bulletin 87/45

(45) Mention de la délivrance du brevet:
25.10.89 Bulletin 89/43

(84) Etats contractants désignés:
AT BE CH DE ES GB IT LI LU NL SE

(56) Documents cité:
EP-A-0 011 572

(73) Titulaire: Blandin, Michel Maurice R. A., 25 rue
des Bergeries, F-93230 Romainville (FR)
Titulaire: Blandin, Philippe Pierre P. C., 1 rue
Samson, F-75013 Paris (FR)

(72) Inventeur: Blandin, Michel Maurice R. A., 25 rue
des Bergeries, F-93230 Romainville (FR)
Inventeur: Blandin, Philippe Pierre P. C., 1 rue
Samson, F-75013 Paris (FR)

(74) Mandataire: Barnay, André François, Cabinet
Barnay 80 rue Saint- Lazare, F-75009 Paris (FR)

## Description

La présente invention est relative à un procédé pour former directement un revêtement isolant sur un support.

On connaît déjà par le document de brevet EP-A-0 011 572 un procédé de fabrication d'un produit isolant, qui utilise la réaction connue du tétraborate de sodium avec l'alcool polyvinylique et qui consiste à projeter simultanément d'une part un mélange formé de particules et de tétraborate de sodium et d'autre part de l'alcool polyvinylique.

Ce procédé nécessite une préparation préalable qui consiste à traiter les particules avec le tétraborate de sodium et par conséquent entraîne, en plus de l'appareillage et du temps nécessaires au traitement, un stockage et un conditionnement des particules traitées et donc une immobilisation financière importante.

En outre, ce procédé limite le choix des particules pouvant être utilisées, et le transport du produit sur le lieu d'application.

Enfin, il convient de souligner que la projection sous pression de particules imprégnées de tétraborate de sodium provoque une émission de poussières de ce produit, qui sont irritantes et incommodent les applicateurs en se dispersant dans l'atmosphère.

L'invention se propose de supprimer ces inconvénients en fournissant un procédé du type précité permettant en outre de l'étendre à l'utilisation de particules ou de fibres quelconques facilement disponibles près du lieu d'application, et un produit pour la mise en oeuvre de ce procédé.

Elle a pour objet à cet effet un procédé de formation d'un revêtement isolant directement sur un support, dans lequel on fait réagir un borate de sodium avec de l'alcool polyvinylique selon la revendication 1.

Grâce à ce procédé, l'atmosphère environnante n'est pas polluée par de la poussière de tétraborate de sodium qui est non seulement irritant mais provoque un début de gélification de l'alcool polyvinylique projeté.

Suivant une autre caractéristique de l'invention, le jet de particules ou de fibres est projeté entre les jets de ladite composition à base de pentaborate de sodium et d'alcool polyvinylique.

Suivant un mode de mise en oeuvre de ce procédé la composition à base de pentaborate de sodium est projetée sous forme de mousse et le courant de particules ou de fibres et les jets de mousse et d'alcool polyvinylique sont concentriques.

Grâce à ce procédé, qui peut être facilement mis en oeuvre au moyen de matériels existants, on peut utiliser toutes sortes de fibres, par exemple du chanvre, de la sciure, des fibres végétales coupées minérales ou autres, qui sont disponibles dans le commerce.

On comprend que le procédé suivant l'invention se différencie du procédé connu d'une part en ce qu'on utilise des particules ou des fibres non traitées et, d'autre part, en ce que le mélange des composants du produit final se produit de lui-même, sans aucune intervention, uniquement en aval de l'appareil de projection, entre la sortie de celui-ci et une surface à revêtir d'isolant.

Ce procédé utilise notamment les turbulences produites par le choc des produits pulvérisés par l'appareil de projection sur la surface à revêtir, ces turbulences favorisant à la fois le mélange des composants, leur réaction et leur fixation sur les particules et sur ladite surface.

En supprimant la préparation préalable des fibres ou particules et en permettant l'utilisation de fibres quelconques disponibles dans le commerce, l'invention procure des avantages considérables.

L'invention a également pour objet une composition à base de pentaborate de sodium pour la mise en oeuvre du procédé défini ci-dessus, caractérisé en ce qu'elle comprend de 10 à 40 % de pentaborate de sodium en solution dans de l'eau mélangés en parties égales avec une solution combinée de bore et d'azote ayant une teneur en azote d'environ 11 % et une teneur en bore d'environ 7 %.

De préférence, ladite composition contient environ 20 % de pentaborate de sodium.

On obtient ainsi une composition avantageusement concentrée qui peut être diluée dans de l'eau sur le lieu d'application dans une proportion de 5 à 20 %.

En outre, cette composition se dépose et ne cristallise pas et résiste au gel.

De préférence, la solution combinée de bore et d'azote est le produit commercialisé par la firme "Le Borax Français" sous l'appellation "SOLUBOR AMINE".

Enfin, on notera que ladite composition trouve également une application avantageuse dans la restauration des revêtements isolants projetés à base d'amiante ou de fibre de roche liés avec des liants hydrauliques.

## Revendications

1. Procédé pour former un revêtement isolant directement sur un support, dans lequel on fait réagir un borate de sodium avec de l'alcool polyvinylique l'on projette simultanément: des particules ou des fibres quelconques non traitées inertes, le borate de sodium et au moins un jet pulvérisé d'alcool polyvinylique caractérisé en ce que le borate de sodium utilisé est du pentaborate de sodium et que le pentaborate du sodium est projeté ou bien sous forme de jet pulvérisé d'une composition liquide ou bien sous forme de mousse.

2. Procédé suivant la revendication 1, caractérisé en ce que le jet de particules ou de fibres est projeté entre les jets de ladite composition à base de pentaborate de sodium et d'alcool polyvinylique.

3. Procédé suivant la revendication 1, caractérisé en ce que la composition à base de tétraborate de sodium est projetée sous forme de mousse et le courant de particules ou de fibres et les jets de mousse et d'alcool polyvinylique sont concentriques.

4. Composition à base de pentaborate de sodium pour la mise en oeuvre du procédé défini suivant les revendications 1 à 3, caractérisée en ce qu'elle comprend de 10 à 40 % de pentaborate de sodium en solution dans de l'eau mélangés en parties égales avec une solution combinée de bore et d'azote ayant une teneur en azote d'environ 11 % et une teneur en bore d'environ 7 %.

5. Composition suivant la revendication 4, caractérisée en ce qu'elle contient de préférence 20 % de pentaborate de sodium.

**Patentansprüche**

1. Verfahren zur direkten Bildung einer Isolationsbeschichtung auf einem Trägermaterial bei dem man ein Natriumborat mit Polyvinylalkohol reagieren läßt und gleichzeitig beliebige nicht behandelte inerte Partikeln oder Fasern, das Natriumborat und mindestens einen pulverisierten Strahl Polyvinylalkohol aufspritzt, dadurch gekennzeichnet, daß das verwendete Natriumborat Natriumpentaborat ist und dieses Natriumpentaborat entweder in Form eines pulverisierten Strahls einer flüssigen Mischung oder in Form von Schaum aufgespritzt wird.

2. Verfahren gemäß Anspruch 1, dadurch gekennzeichnet, daß der Partikel- bzw. der Faserstrahl zwischen den Strahlen mit der genannten Mischung auf Natriumpentaboratbasis und mit dem Polyvinylalkohol gespritzt wird.

3. Verfahren gemäß Anspruch 1, dadurch gekennzeichnet, daß die Mischung auf Natriumtetraboratbasis in Form von Schaum aufgespritzt wird und der Partikel- bzw. Faserstrom und die Schaum- und Polyvinylalkoholstrahlen konzentrisch sind.

4. Mischung auf Natriumpentaboratbasis zur Durchführung des gemäß den Ansprüchen 1 bis 3 bestimmten Verfahrens, dadurch gekennzeichnet, daß sie 10 bis 40 % in Wasser gelöstes, zu gleichen Teilen mit einer kombinierten Lösung aus Bor und Stickstoff mit einem Stickstoffgehalt von etwa 11 % und einem Borgehalt von etwa 7 % vermischtes Natriumpentaborat enthält.

5. Mischung gemäß Anspruch 4, dadurch gekennzeichnet, daß sie vorzugsweise 20 % Natriumpentaborat enthält.

**Claims**

1. Process for the formation of an insulating coating directly on a support, in which a sodium borate is reacted with polyvinyl alcohol, with simultaneous projection of any untreated inert particles or fibres, the sodium borate and at least one jet spray of polyvinyl alcohol, characterised in that the sodium borate which is used is sodium pentaborate and the sodium pentaborate is projected either in the form of a jet spray of a liquid composition or else in the form of a foam.

2. Process according to claim 1, characterised in that the jet of particles or fibres is projected between the jets of the said composition based upon sodium pentaborate and polyvinyl alcohol.

3. Process according to claim 1, characterised in that the composition based upon sodium tetraborate is projected in the form of a foam and the stream of particles or of fibres and the jets of foam and polyvinyl alcohol are concentric.

4. Composition based upon sodium pentaborate for carrying out the process defined according to claims 1 to 3, characterised in that it comprises 10 to 40 % of sodium pentaborate in aqueous solution mixed in equal parts with a combined solution of boron and nitrogen having a nitrogen content of about 11 % and a boron content of about 7 %.

5. Composition according to claim 4, characterised in that it contains preferably 20 % of sodium pentaborate.